# EUROPEAN PATENT SPECIFICATION

(11) **EP 3 256 766 B1**
(45) Date of publication and mention of the grant of the patent: **23.01.2019**
(21) Application number: 16709291.5
(22) Date of filing: 11.02.2016
(51) Int. Cl.: F16L 5/04, F16L 5/14, G01M 3/26, H02G 3/22

(54) **CONDUIT FRAME FOR SEALINGLY DUCTING PIPES OR CABLES**
LEITUNGSRAHMEN ZUM DICHTEN DURCHFÜHREN VON ROHREN UND/ODER KABELN
CHÂSSIS DE CONDUIT POUR LE PASSAGE ÉTANCHE DE TUYAUX ET/OU DE CÂBLES

(30) Priority: 11.02.2015 NL 1041186
(43) Date of publication of application: 20.12.2017
(73) Proprietor: Beele Engineering B.V., 7122 NZ Aalten (NL); Beele, Johannes Alfred, 7122 NZ Aalten (NL)
(72) Inventor: BEELE, Johannes Alfred, 7122 NZ Aalten (NL)
(74) Representative: Hoffmann Eitle
(86) International application number: PCT/EP2016/052894
(87) International publication number: WO 2016/128506

(56) References cited:
- EP-A1- 1 635 099
- EP-A1- 1 892 448
- EP-A1- 2 413 123
- WO-A1-02/052187
- DE-A1- 10 150 075
- US-A- 5 140 848

## Description

One aspect of the disclosure that is presently not claimed relates to a ship construction, a floating construction, or a non-floating off-shore construction for holding on-board human beings. One aspect of the invention is related to a conduit frame for installation on-board of a ship construction, a floating construction, or a non-floating off-shore construction and sealingly ducting at least one pipe and/or cable that extends through the frame. A further aspect of the disclosure is related to a method for testing the sealing integrity of a system comprising a conduit frame which sealingly ducts at least one pipe and/or cable. A further aspect of the disclosure relates to a sealing system comprising a conduit frame for sealingly ducting at least one pipe and/or cable; at least one pipe and/or cable extending through the conduit; and sealing material.

### Background

On-board of a ship, a floating construction or a non-floating off-shore construction for holding on-board human beings one will find many pipes and/or cables extending from one compartment to another. For that purpose, floors, decks, walls or other types of partitions often comprise an opening so that the pipe and/or cable can indeed, via that opening, extend from one compartment to another. The opening may comprise a tubular passage, often referred to as a conduit. One could also consider such a conduit to be fittingly and sealingly installed into or onto the opening. Space which is in the conduit and not occupied by pipes and/or cables is usually occupied by a sealing. The purpose of the sealing is to stop undesired transport of physical phenomena through the conduit. For instance, the sealing may be designed to stop the flow of air, water, noise, fire, poisonous gases, smoke, etc., dampen noise and vibrations, and keep a fire for as long as possible isolated on one side of the conduit without spreading via the conduit to another compartment. The sealing systems are tested, so as to be able to assess their conduit without spreading via the conduit to another compartment. The sealing systems are tested, so as to be able to assess their performance under exposure to predefined circumstances. Accordingly, sealing systems may be certified. For instance, a certificate may be issued for remaining intact under exposure to a nearby fire for the time of one hour. The number of pipes and/or cables extending through the conduit, the type of sealing applied, the temperatures exposed to, etc are recorded on or with the certificate. The availability of these certificates facilitates choosing a particular sealing system for use on-board at a specific location for conduits through which a certain number of pipes and/or cables extend.

EP 1 892 448 A1 discloses a system for dynamically sealing at least one conduit through which a pipe or cable extends.

A number of sealing systems are known in the marketplace. One system is often referred to as the "block system". It was, for instance, installed on the Emma Maersk which according to the official accident report got flooded in the Suez Canal in February 2013 and almost sunk, partly due to a failure of the block system. The system comprises modular rubber blocks for placement in a conduit. A number of the blocks are provided with a hole for holding a cable. The blocks are built up from two half blocks, each having a recess that forms half the hole. There may also be wedge blocks, sometimes provided with bolts; there may be modular blocks without a hole for occupying surplus space in the conduit, and stay plates. The conduit may comprise a welded frame. In use, a number of cables of different diameters may extend through the conduit. Then, the conduit contains the modular blocks (the blocks with a hole for a cable and the blocks without such a hole). The wedged blocks are normally put between these modular blocks with the aim to make the construction of the modular blocks tight and firm. The stay plates are fitted with layers of these blocks and aim to keep these blocks in the right position in the welded frame. A mechanism may be available for putting the blocks under pressure aimed at tightening sealing by the blocks. As explained in the accident report, the system failed on at least an individual component level.

With the block system, there is a need to compress the blocks after positioning in the welded frame, i.e. the conduit. Compressing the components will, in the long run, result in deterioration of these components, due to time-related phenomena like creep and stress relaxation. Deterioration not only occurs on the level of the components, but also on the level of the sheathing of the cables. These can be irreversibly deformed by the applied compression of the blocks surrounding a cable. As a result of this, replacing an existing sealing system by a similar sealing system comprising blocks having a hole, is highly unlikely to work well as the diameter of the cable may have changed.

In this context, reference is also made to IEC 60079-14, particularly clause 9.1.4 which indicates that "low smoke and/or fire resistant cables usually exhibit cold flow characteristics". This seems to be particularly relevant for thermoplastic materials which tend to flow when subjected to pressure at ambient temperature.

Given that certificates are issued on the basis of tests for which normally a brand new sealing system is applied, and, given that as explained above, a sealing system known in the marketplace deteriorates over time, there is a need for testing the sealing integrity of the sealing systems once these have been in use for a while.

DE 10150075 A1 and EP 2413123 A1 each disclose a sealing system in a conduit for cables and/or pipes. The system comprises sealing elements for sealing off each end of the conduit. The sealing integrity is tested by establishing at at least one end of the conduit a fluid communication through the sealing elements placed in that end of the conduit. This may be achieved by having a channel, for instance formed by a short pipe or valve, extending into the conduit through the respective sealing element up to a position between the sealed ends of the conduit. Via the fluid communication established in that way the gas tightness of the sealed ends can be measured.

A disadvantage of such a way of testing the integrity of the sealing is that it reduces the space available for ducting cables and/or pipes through the conduit. In addition to that, there is the possibility that the sealing between the channel, i.e. the short pipe or valve and the sealing material is inadequate, so that the testing itself introduces a leakage and generates a perception of a prior integrity of the sealing.

More particularly, when relatively heavy measurement equipment is connected to the channel (or short pipe/valve) as extending through the sealing, and the conduit has a horizontal axis, it is possible that due to the weight caused by the hanging of the equipment onto the short pipe extending into the conduit, the sealing is distorted and/or deformed, introducing a leak in the sealing or in any case only allowing for a measurement that is negatively influenced by the presence of the measurement equipment itself. This may lead to marking a sealing system as no longer up to the task and thus ready for swift replacement in situations where the sealing may actually have been still in good order when no measurement is carried out.

A further disadvantage is that the testing needs to be carried out in the vicinity of the cables and/or pipe extending through the conduit, exactly where space is limited due to the presence of these pipes and/or cables.

Finally, the certificates are usually not based on tests having a fluid communication extending through the sealing into the conduit for checking the sealing integrity. If a pipe extends through the sealing into the conduit, then that pipe also extends out of the conduit at the other end. The fluid communication for testing the sealing integrity ends between the sealings in the conduit. Such testing thus produces physical conditions which are not equal to those present during the tests on the basis of which certificates were issued.

### Object of the Invention

It is an object of the invention to provide a conduit frame for testing the sealing integrity of conduit frames which sealingly duct at least one pipe and/or cable. The invention aims to address at least one of the above-identified problems.

### Summary of the Invention

The invention is defined by a conduit frame according to claim 1.

The disclosure provides for a ship construction, floating construction, or non-floating off-shore construction for holding on-board human beings. The construction has at least one partitioning element for delimiting at least one compartment. The at least one element is provided with at least one conduit frame for sealingly ducting at least one pipe and/or cable that extends through the partitioning element from and/or into one of the at least one compartment. The conduit frame has an inner wall and at least two ends which can each be sealed off for obtaining a sealed-off condition of the conduit frame. The conduit frame has between the ends a free volume section for trapping air between the sealed-off ends. The conduit frame is provided with at least one connector for establishing a fluid connection between the volume section and a position outside the conduit. The connector is closeable and openable, so that in the volume section the gas pressure can be changed for testing in the sealed-off condition the sealing integrity. The connector is fixed to the conduit frame.

On-board of such a construction it will be possible to check out as to what extent the sealing system has been installed correctly so that it lives up to the expectations generated by the certificate; and to what extent the sealing system has deteriorated so that one can establish, during use of such a construction, when the sealing system is no longer meeting the requirements of the certificate issued for that sealing system and conduit frame. During use of the construction it may then be possible, at a suitable moment in time, to replace the sealing system so that the safety of the construction is more frequently established and disasters such as the capsizing of the Emma Maersk could be avoided.

Having the connector fixed to the frame has the advantage that it is not necessary to insert in the sealings the connector. Thus, instead of the connector, another cable or pipe can be ducted, allowing for optimized use of the conduit space. Furthermore, the sealings are not likely to be altered by the establishing of a fluid communication with free volume within the conduit. The actual sealing system as tested for the issuance of a certificate, and for testing later on the sealing integrity, can be similar, if not identical.

In an embodiment of each of these aspects of the disclosure and the invention, at least two sealing devices are provided for putting the conduit frame in a sealed-off condition.

According to another aspect of the disclosure, a method is provided for testing the sealing integrity of a system comprising a conduit frame which sealingly ducts at least one pipe and/or cable. The conduit frame has an inner wall and at least two ends suitable for being sealed off to obtain a sealed-off condition of the conduit. Between the ends a free volume section is available for trapping a gas between the sealed-off ends. The method comprises introducing pressurized gas in the free volume section. Alternatively, the method may comprise reducing the gas pressure in the free volume and monitoring whether the reduced pressure remains stable.

According to a further aspect, the disclosure provides for a sealing system comprising: a conduit frame for sealingly ducting at least one pipe and/or cable; at least one pipe and/or cable extending through the conduit, and sealing material. The conduit frame has an inner circumferential wall and at least one set of two ends through which at least one pipe and/or cable enters or exits the conduit frame. The sealing material is in each set at least two sealing positions along a path between the two ends positioned for sealing the space between the inner wall and the at least one pipe and/or cable. Within the conduit frame, the at least two sealing materials are spatially separated from one another. The conduit frame is further provided with at least one connector for establishing a fluid connection between an outer position outside the conduit and an inner free volume section within the conduit between the at least two sealing materials. The connector is closeable and openable, so that at the inner free volume within the conduit between the at least two sealing materials a gas pressure can be changed for testing the sealing integrity of the sealing system.

The invention will further be explained on the basis of a drawing which shows:
In Fig. 1 a part of an embodiment of a construction according to the invention;
In Fig. 2 a part of an embodiment of a construction and a conduit frame according to the invention;
Fig. 3 a part of an embodiment of a construction and a conduit frame according to the invention;
Fig. 4 a part of an embodiment of a construction and a conduit frame according to the invention;
Fig. 5 a part of an embodiment of a construction and a conduit frame according to the invention;
Fig. 6 a part of an embodiment of a construction, a conduit frame and a sealing system according to the invention;
Fig. 7 a part of an embodiment of a construction, a conduit frame and a sealing system according to the invention;
Fig. 8 a part of an embodiment of a construction, a conduit frame and a sealing system according to the invention;
Fig. 9 a part of an embodiment of a construction, a conduit frame and a sealing system according to the invention;
Fig. 10 a part of an embodiment of a construction, a conduit frame and a sealing system according to the invention;
Fig. 11 a part of an embodiment of a construction, a conduit frame and a sealing system according to the invention;
Fig. 12 a part of an embodiment of a construction, a conduit frame and a sealing system according to the invention;
Fig. 13 a part of an embodiment of a construction, a conduit frame and a sealing system according to the invention.

In the drawing like parts are denoted by like references.

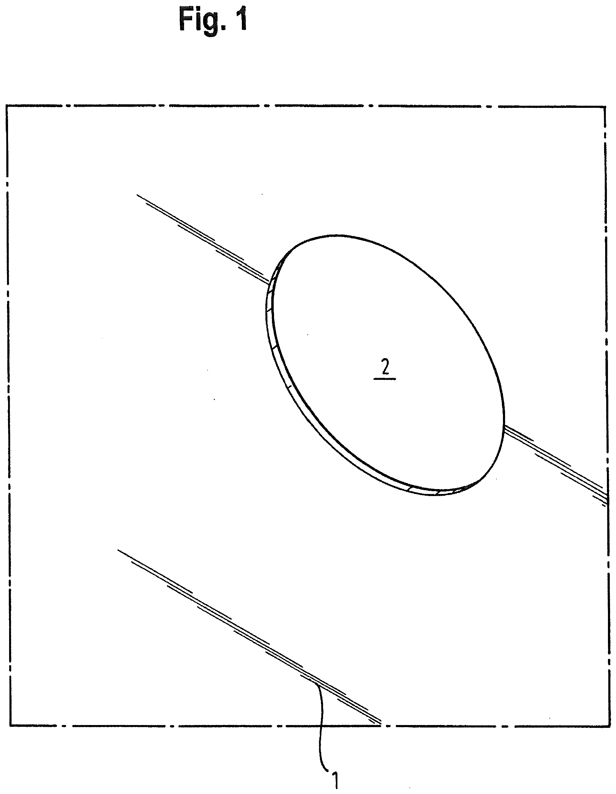

Fig. 1 shows a partitioning element 1 as part of a construction and for delimiting at least one compartment. The construction may be a ship construction, a floating construction or a non-floating off-shore construction for holding on-board human beings. As shown, the partitioning element 1 comprises an opening 2 for extending therethrough one or more pipes, or one or more cables, or both. Fig. 1 shows an element of a construction before the invention is applied.

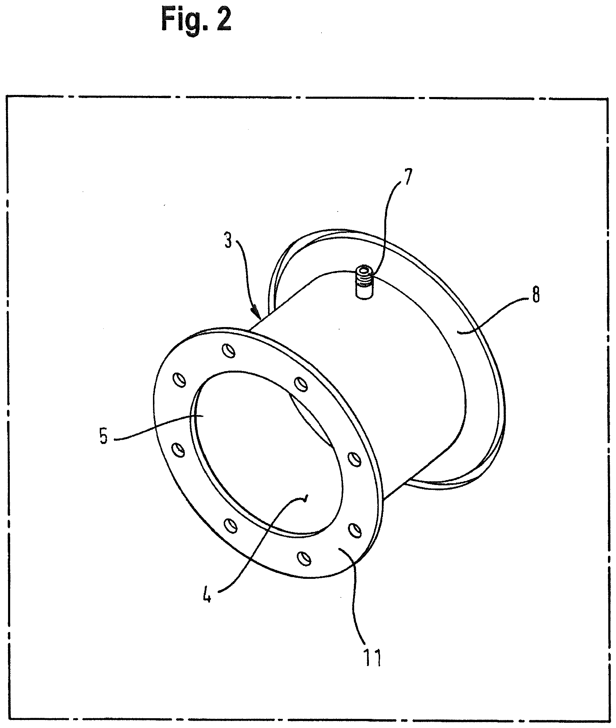

Fig. 2 shows that the partitioning element is provided with a conduit frame 3 for sealingly ducting one or more pipes, one or more cables, or both, while these are extending through the opening 2, so as to extend through the partitioning element 1 from one compartment into another or from a compartment, or into a compartment, as available on the construction.

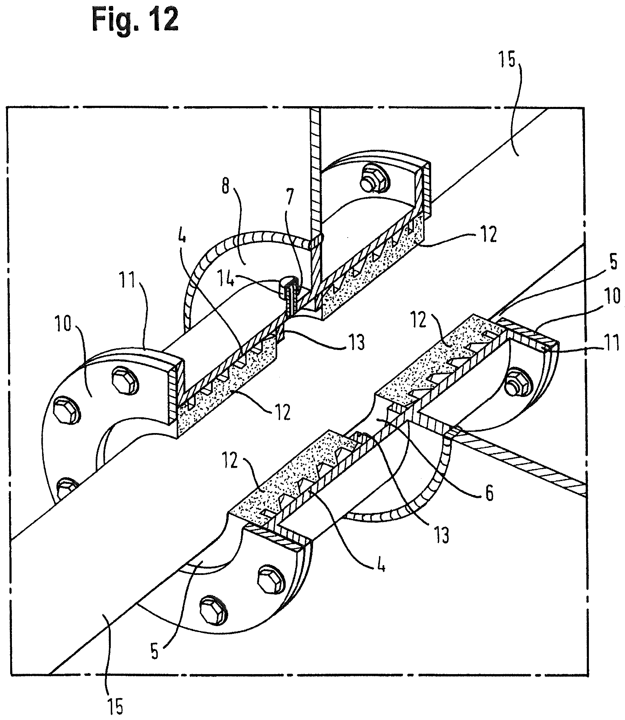

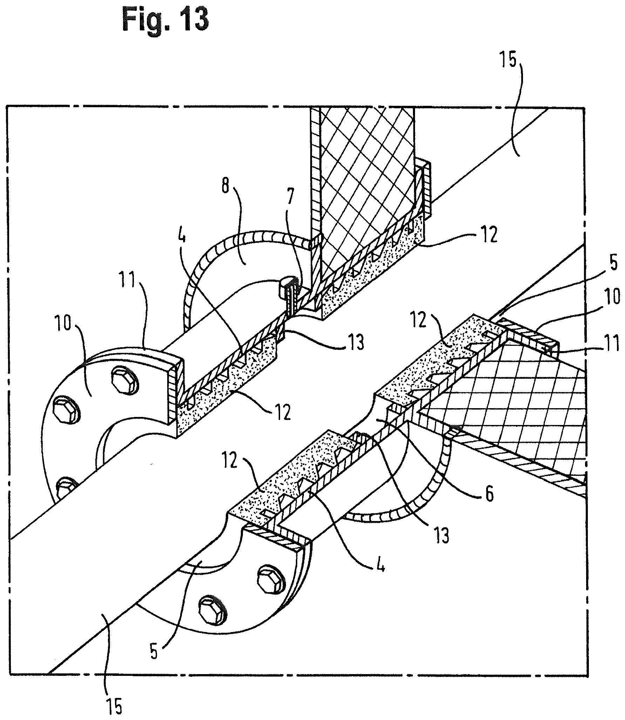

Jumping to Fig. 12 and 13, which show partly exploded embodiments of a construction, a conduit frame and a sealing system according to the invention, it is seen that the conduit frame 3 has an inner wall 4 and at least two ends 5. As also shown, the ends 5 can also each be sealed off for obtaining a sealed-off condition of the conduit frame 3. Sealing off is by way of example shown by sealing plugs 12, in this example each formed by two plug segments. The conduit frame 3 has between the ends a free volume section 6 for trapping air between the sealed-off ends 5. The conduit frame 3 is provided with a connector 7 for establishing a fluid connection between the free volume section 6 and a position outside the conduit 3. The connector 7 is closeable and openable, so that in the free volume section the gas pressure can be changed for testing in the sealed-off condition the sealing integrity.

The connector 7 is preferably, as shown, provided at an outer circumferential wall of the conduit frame 3. Ideally the connector 7 has been welded to the conduit frame 3. The connector 7 is shown to be at an upper position. However, also other circumferential positions are conceivable.

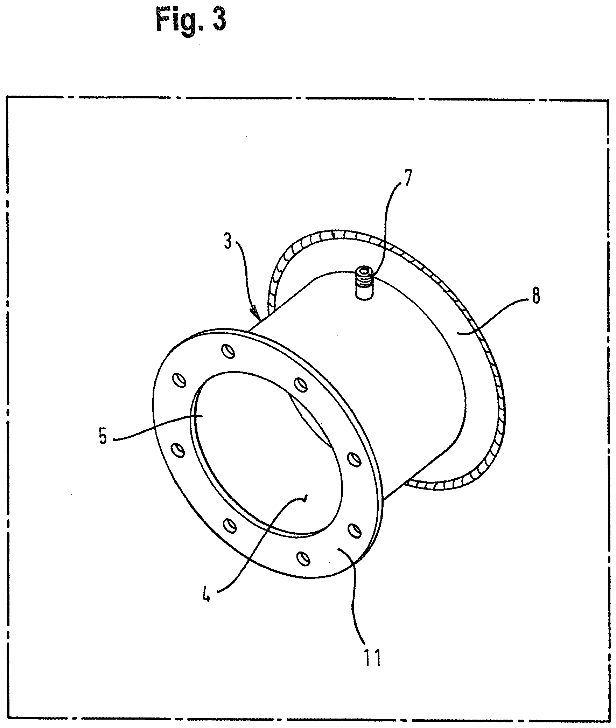

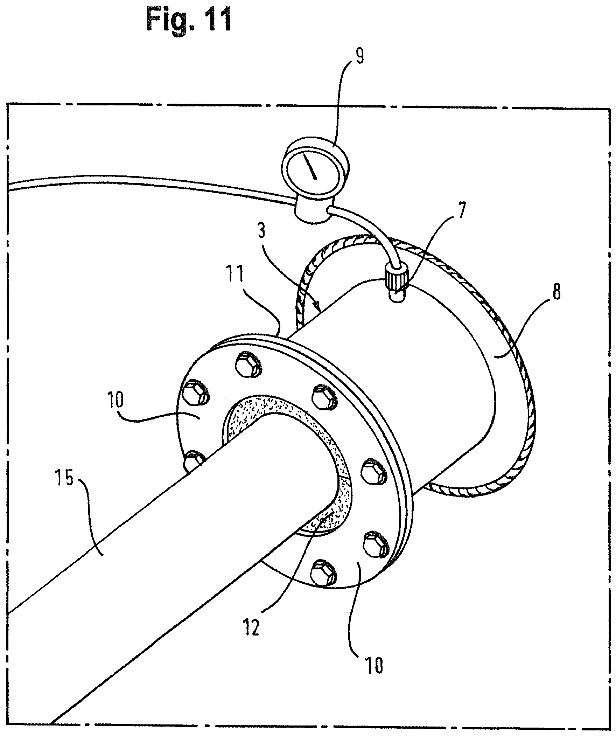

Turning back to Fig. 2, it is noted that the conduit frame 3 is preferably provided for installation on-board of a ship construction, floating construction, or non-floating off-shore construction. These constructions are usually for holding on-board human beings. As it becomes more clear from Fig. 3, for the purpose of such installation the conduit frame 3 is by way of example provided with a flange 8 for sealingly fitting the conduit frame 3 into or onto an opening 2 for extending therethrough one or more pipes, one or more cables, or both. Although it is clear from Fig. 3 that the flange 8 may be suitable for welding into the opening 2 and is accurately dimensioned for that purpose, it is equally possible that the flange 8 is welded onto the opening 2 or that the flange 8 is bolted onto the opening 2, using gaskets, etc. Any other way for sealingly fitting the conduit frame 3 into or onto an opening 2, using flange 8 or not, is possible. From Fig. 11 it is clear that the construction or conduit frame 3 may be provided with a pressure gauge 9 for connecting with the connector 7 and for measuring the pressure in the free volume section 6 of the conduit frame 3. Although not shown, the construction or conduit frame 3 may additionally or alternatively be provided with a pump (not shown) for connecting with the connector 7 and introducing pressurized gas into the free volume section.

Accordingly, a method for testing the sealing integrity of a conduit frame which sealingly ducts at least one pipe and/or cable can be carried out. The method comprises introducing pressurized gas in the free volume section 6 that is available between the ends 5 for trapping gas when the ends 5 are sealed off.

Although the presence of a pressure gauge 9 facilitates testing the sealing integrity by measuring the pressure and monitoring whether it remains constant at a high level, it may equally be possible to just introduce pressurized gas in the free volume section, apply soapy water at the ends 5 of the conduit frame and see whether the formation of soap bubbles takes place or not. The presence of soap bubbles indicates that gas is leaking from the respective end 5 of the conduit 3 and that the sealing is not capable of sustaining a pressure which is at that stage present in the free volume section 6.

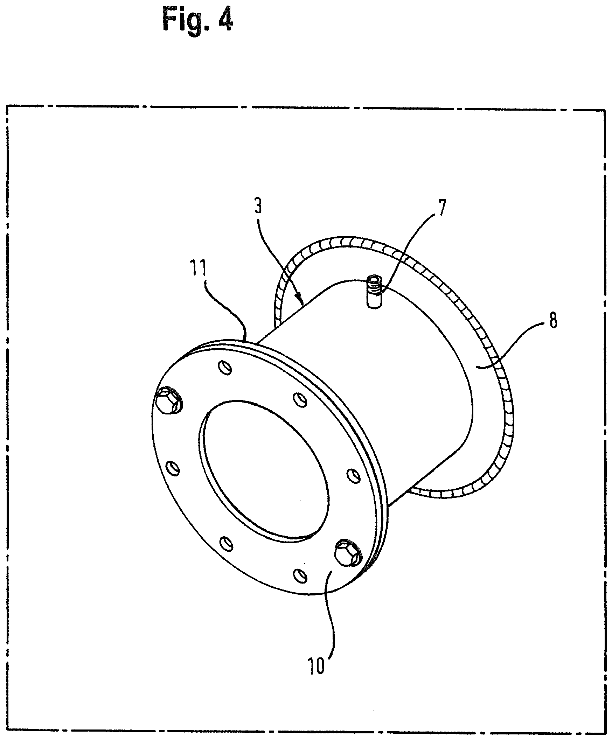

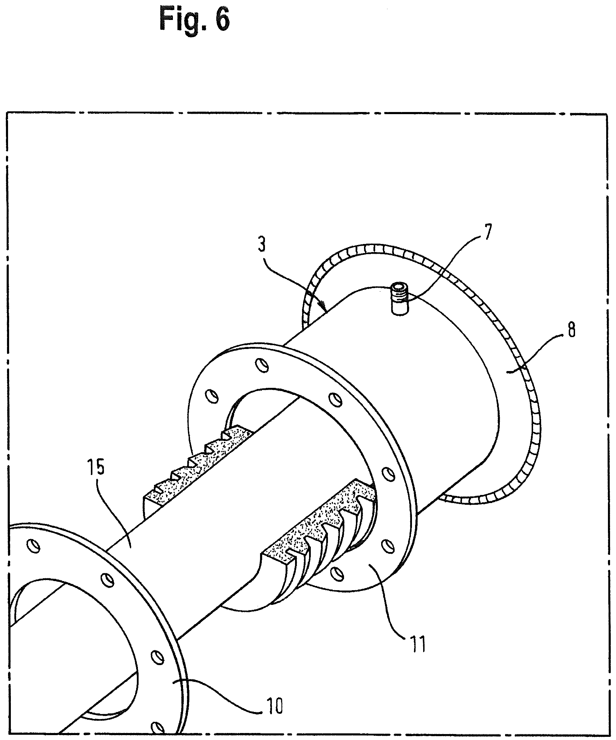

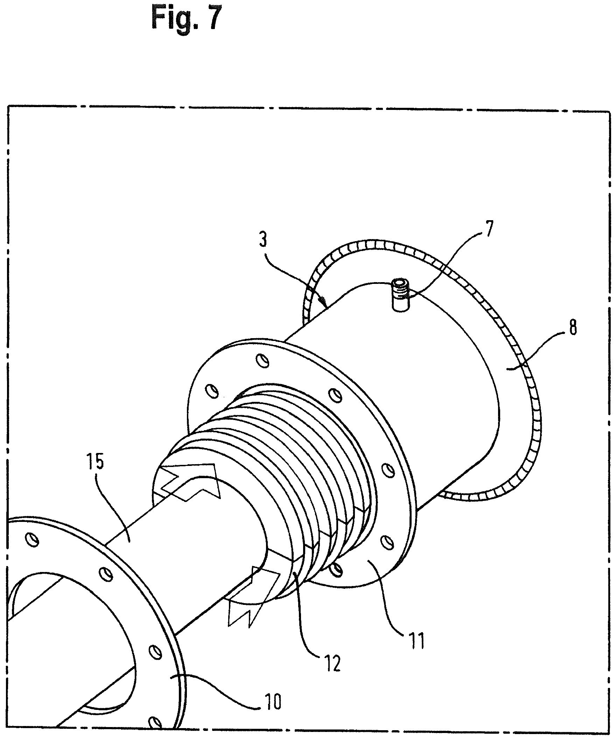

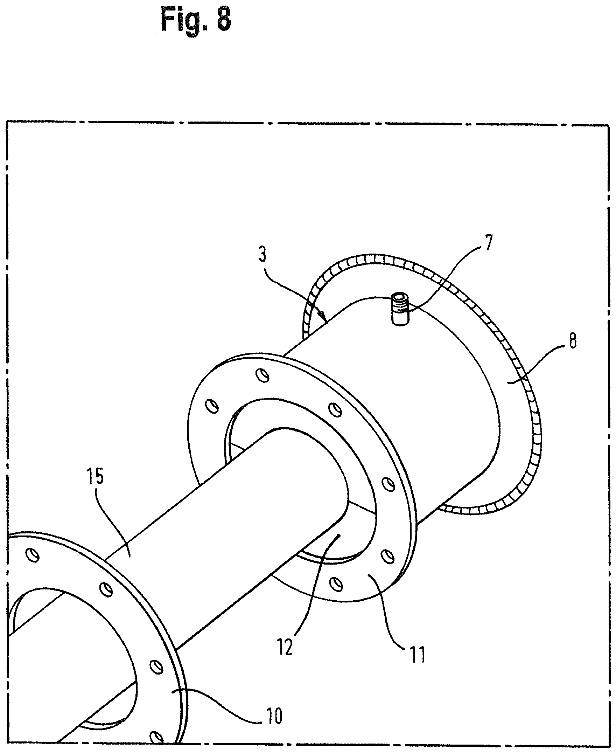

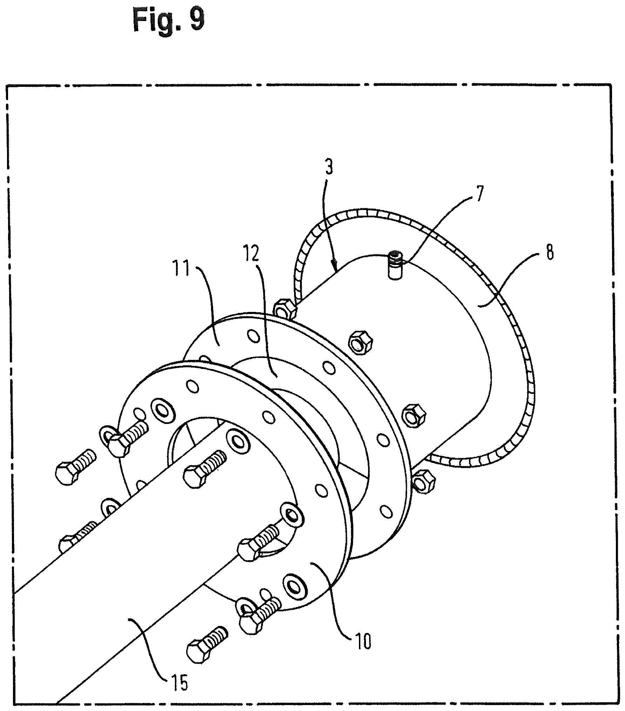

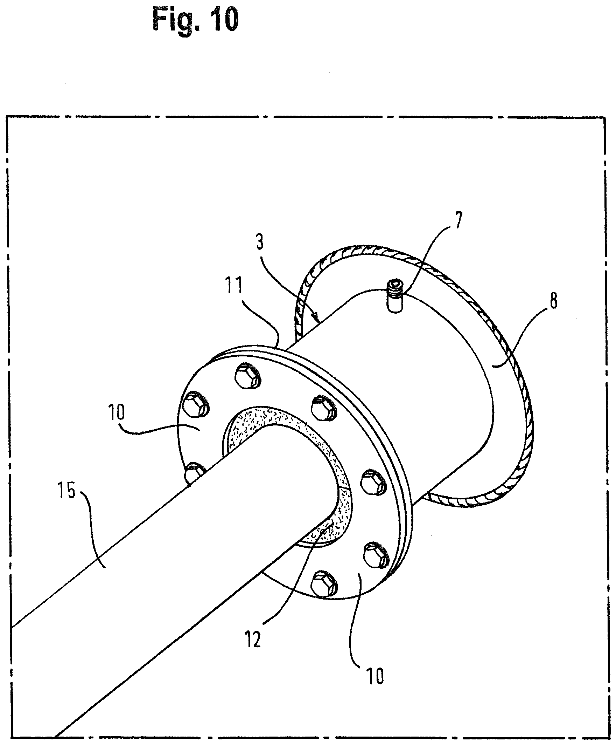

As can be seen from Figs. 4 - 13, preferably, for each end 5 a retainer 10 is provided so that a sealing device or other form of sealing material is retained within the conduit 3 when the pressure in the free volume section 6 is raised relative to a pressure outside the conduit at the side of such a retainer 10.

As can be seen from each of the Figs. 4 - 13, a retainer 10 is fixable to the conduit frame 3, which may for that purpose be provided with a flange 11. The retainer may however also be provided within an end 5 of conduit frame 3, for instance on a shoulder available on the inner wall 4 (not shown). The retainer 10 may thus be fixable in or to the conduit frame 3. However, for conduit frames which are placed such that one end 5 cannot be easily provided with a retainer 10, it is also possible that at that end the retainer 10 is fixed in or to the respective conduit frame.

Embodiments of a conduit frame according to the invention are provided with at least two sealing devices 12 as shown in place in Figs. 12 and 13. The conduit frame 3 is internally provided with at least one blocking element 13 for blocking too deeply inserting of the respective sealing devices 12. Additionally, it is also possible that each of the at least two sealing devices 12 has a flange (not shown) for preventing insertion of the sealing device too deeply into the conduit frame 3. For such an embodiment the length of the conduit frame3 is such that upon maximum insertion of the sealing device the free volume section 6 remains available.

it is also that the conduit frame 3 is provided with at least one spacer 14 for establishing in the conduit frame 3 the distance between the respective sealing devices 12. Clearly, the blocking element 13 and spacer 14 may be provided by the very same construction within the conduit frame 3. That is, spacer 14 may comprise a blocking element 13 for preventing the free volume section 6 from being fully occupied by one or more sealing devices 12. Likewise, it may be that a blocking element 13 for preventing the free volume section 6 from being fully occupied by one or more sealing devices 12 may be considered to comprise a spacer 14 for establishing in the conduit frame 3 a distance between the respective sealing devices 12. One or both of the blocking element 13 and the spacer 14 is an integral part of the conduit. However, at least one of the blocking element 13 and the spacer 14 may equally be a part that is separately placeable within the conduit frame 3.

It is possible that a spacer 14 is part of one of the sealing devices 12 or formed by a part of one of the sealing devices 12.

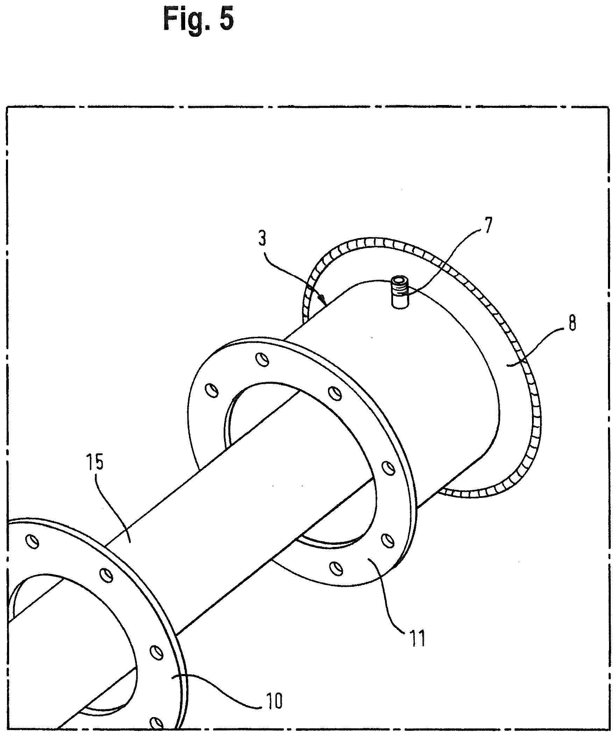

The connector is fixed to the conduit frame 3 at a position that facilitates direct access to the free volume section 6. Figs. 5 - 11 are self-explanatory and are provided with the purpose of demonstrating the possibility for carrying out the invention.

Many modifications and variations of the invention are possible. A sealing device may equally be formed by a sealing system comprising a sealant. A possible sealing device may be provided by a number of sleeve elements and such a sealant, as commercially available from the Applicant and known as the so-called NOFIRNO system (also described in WO 2008/104237). However a sealing device may also comprise parts of the so-called block system. That is, known sealing systems can be used for carrying out the invention. For instance, it is possible that known systems such as the block systems mentioned in the introduction of this specification, are positioned "back-to-back" for sealing a so-called cable penetration. Between these respective block systems as put "back-to-back", the free volume section 6 is then available for changing the air pressure and testing in the sealed condition of the conduit frame the sealing integrity.

The connector 7 is preferably biased to being closed, so that it cannot be forgotten to close the connector again. On the other hand, it should be borne in mind that even if the connector 7 remains open, still two sealing systems are in place for sealing off the conduit frame. Nevertheless, it is of course preferred that the connector 7 is biased to a closed position, so that salty atmospheric conditions cannot reach an inner volume of the conduit frame 3. Instead of using air for raising the pressure in the inner free volume section 6, it may be preferred to use for instance nitrogen gas so that the introduction of water molecules (which may be available in very humid air) is unlikely. Although it is possible that the sealing of each conduit frame as fully installed and sealed off is tested one after the other by raising the pressure and measuring whether, and if so, how quickly, the pressure drops off, it is equally possible that each important conduit frame is constantly measured, automatically, so that one can from a distance monitor if, and if so, which conduit frame, has no longer the expected sealing integrity.

The following provides further disclosure that is presently not claimed.

A sealing system comprising: a conduit frame for sealingly ducting at least one pipe and/or cable; at least one pipe and/or cable extending through the conduit; and sealing material, wherein the conduit frame has an inner circumferential wall and at least one set of two ends through which the at least one pipe and/or cable enters or exits the conduit frame, wherein sealing material is in each set at at least two sealing positions along a path between the two ends positioned for sealing the space between the inner wall and the at least one pipe and/or cable, within the conduit frame the at least two sealing materials being spatially separated from another, the conduit frame further being provided with at least one connector for establishing a fluid connection between an outer position outside the conduit and an inner free volume section within the conduit between the at least two sealing materials, the connector being closeable and openable, so that at the free volume within the conduit between the at least two sealing materials the gas pressure can be changed for testing the sealing integrity of the sealing system.

As another advantage of the invention it is pointed out that the availability of connector 7 may also be used for facilitating insertion of sealing devices 12 into the conduit frame 3.

Particularly when one end of the conduit frame 3 has already been sealed off and another end 5 is being sealed off, for instance by insertion of a sealing plug, the pressure in the free volume section 6 will be raised up to a point that further insertion of the sealing plug is resisted. By opening the connector 7 the high pressure will drop so that further insertion of the sealing plug will become easier.

Although the drawing shows a pipe 15 for extending through the conduit frame 3 as shown, it is equally possible that this pipe is a cable. Furthermore, also where more cables are extending through a conduit frame 3, and the respective sealing devices comprise rubber sleeves and sealant, the invention can be applied. For avoiding that during testing a very high pressure is immediately applied to the sealant at positions where the sealant is exposed to the introduction of the highly pressurized gas, it is recommended to install an additional device which seals the free volume section 6 off from the sealing device 12, so that the high pressure for testing the sealing integrity is applied to the entire sealing device 12 and not only to the sealant.

Another possibility provided by the present disclosure and useful when sealants are applied to seal off the ends of the conduit is the application of subatmospheric pressures, i.e. a "vacuum", in the free volume section in the conduit and measuring the period of time over which the pressure remains constant, or measuring an enhancement of pressure in that free volume for establishing integrity or lack thereof of the sealing system. Advantageously, the sealant can in such a test not be blown out of the conduit.

Although in the drawing a cylindrical conduit frame 3 is shown, is it equally possible to have rectangular-shaped conduit frames, being itself one big conduit. However, it is equally possible that conduit frames have a plurality of conduits. Many modifications are possible with the framework of the invention as defined by the appended claims.

## Claims

1. A conduit frame (3), for sealingly ducting at least one pipe (15) and/or cable that extends through the frame (3) and for installation on-board of a ship construction, a floating construction, or a non-floating off-shore construction for holding on-board human beings, the frame (3) having an inner wall (4) and at least two ends (5) which can in use each be sealed off for obtaining a sealed- off condition of the conduit frame (3), the conduit frame (3) having between the ends (5) a free volume section (6) for trapping air between sealed-off ends (5), the conduit frame being provided with at least two sealing devices (12) for putting the conduit frame (3) in the sealed-off condition, the conduit frame further being provided with at least one spacer (14) for establishing in the conduit frame (3) a distance between the respective sealing devices (12), wherein the at least one spacer (14) comprises at least one blocking element (13) for preventing the free volume section (6) from being fully occupied by one or more sealing devices (12), and wherein the blocking element (13) is an integral part of the conduit frame (3),
**characterized by**
the conduit frame (3) being provided with at least one connector (7) for establishing a fluid connection between the free volume section (6) and a position outside the conduit frame, the connector (7) being closeable and openable, so that in the free volume section (6) the gas pressure can be changed for testing in the sealed-off condition the sealing integrity, the connector (7) being fixed to the conduit frame (3) at a position that facilitates direct access to the free volume section (6).

2. A conduit frame according to claim 1, wherein each of the at least two sealing devices (12) has a flange (8) for preventing insertion of the sealing device (12)too deeply into the conduit frame (3), wherein the length of the conduit frame is such that upon maximum insertion of these sealing devices (12) the free volume section (6) remains available.

3. A conduit frame according to any one of the previous claims, wherein for each end a retainer (10) is provided so that a sealing device (12) is retained within the conduit frame when the pressure in the free volume section (6) is raised relative to a pressure outside the conduit frame at the side of that retainer (10).

4. A conduit frame according to claim 3, wherein at least one the retainers (10) is fixable in or to the conduit frame (3).

5. A conduit frame according to claim 3 or 4, wherein only one of the retainers is fixed in or to the respective conduit frame (3).

6. A conduit frame according to any one of the previous claims, provided with a pressure gauge (9) for connecting with the connector (7) and for measuring the pressure in the free volume section (6) of the conduit frame (3).

7. A conduit frame according to any one of the previous claims, wherein the system is provided with a pump for connecting with the connector (7) and introducing pressurized gas in the free volume section (6).

8. A conduit frame according to any one of the preceding claims, wherein the conduit frame (3) is provided with a flange (8) sealingly fitting the conduit frame (3) into or onto an opening (2) for extending therethrough at least one pipe (15) and/or cable.

9. A conduit frame according to any one of the previous claims, wherein the conduit frame (3) is provided in at least one partitioning element (1) for delimiting at least one compartment of a ship construction, floating construction, or a non-floating off-shore construction for holding on board human beings.

## Patentansprüche

1. Leitungsrahmen (3) zum dichten Durchführen von mindestens einem Rohr (15) und/oder Kabel, das sich durch den Rahmen (3) erstreckt, und zur Installation an Bord einer Schiffskonstruktion, einer schwimmenden Konstruktion oder einer nichtschwimmenden Offshore-Konstruktion zum Halten von Menschen an Bord, wobei der Rahmen (3) eine Innenwand (4) und mindestens zwei Enden (5) aufweist, die bei Verwendung jeweils abgedichtet werden können, um einen abgedichteten Zustand des Leitungsrahmens (3) zu erhalten, wobei der Leitungsrahmen (3) zwischen den Enden (5) einen Abschnitt mit freiem Volumen (6) zum Einfangen von Luft zwischen abgedichteten Enden (5) aufweist, wobei der Leitungsrahmen mit mindestens zwei Abdichtvorrichtungen (12) bereitgestellt ist, um den Leitungsrahmen (3) in den abgedichteten Zustand zu versetzen, wobei der Leitungsrahmen weiter mit mindestens einem Abstandshalter (14) bereitgestellt ist, um im Leitungsrahmen (3) einen Abstand zwischen den entsprechenden Abdichtvorrichtungen (12) zu errichten, wobei der mindestens eine Abstandshalter (14) mindestens ein Sperrelement (13) umfasst, um zu verhindern, dass der Abschnitt mit freiem Volumen (6) vollständig von einer oder mehreren Abdichtvorrichtungen (12) belegt wird, und wobei das Sperrelement (13) ein integraler Bestandteil des Leitungsrahmens (3) ist,
**dadurch gekennzeichnet, dass**
der Leitungsrahmen (3) mit mindestens einem Anschlussstück (7) zum Errichten einer Fluidverbindung zwischen dem Abschnitt mit freiem Volumen (6) und einer Position außerhalb des Leitungsrahmens bereitgestellt ist, wobei das Anschlussstück (7) so geschlossen und geöffnet werden kann, dass im Abschnitt mit freiem Volumen (6) der Gasdruck verändert werden kann, um im abgedichteten Zustand die Abdichtungsintegrität zu testen, wobei das Anschlussstück (7) am Leitungsrahmen (3) an einer Position befestigt ist, die direkten Zugang zum Abschnitt mit freiem Volumen (6) ermöglicht.

2. Leitungsrahmen nach Anspruch 1, wobei jede der mindestens zwei Abdichtvorrichtungen (12) einen Flansch (8) aufweist, um ein zu tiefes Einführen der Abdichtvorrichtung (12) in den Leitungsrahmen (3) zu verhindern, wobei die Länge des Leitungsrahmens so ist, dass bei maximalem Einführen der Abdichtvorrichtungen (12) der Abschnitt mit freiem Volumen (6) verfügbar bleibt.

3. Leitungsrahmen nach einem der vorstehenden Ansprüche, wobei für jedes Ende ein Haltestück (10) bereitgestellt ist, sodass eine Abdichtvorrichtung (12) innerhalb des Leitungsrahmens gehalten wird, wenn der Druck im Abschnitt mit freiem Volumen (6) im Verhältnis zu einem Druck außerhalb des Leitungsrahmens an der Seite des Haltestücks (10) angehoben wird.

4. Leitungsrahmen nach Anspruch 3, wobei mindestens eines der Haltestücke (10) in oder am Leitungsrahmen (3) befestigt werden kann.

5. Leitungsrahmen nach Anspruch 3 oder 4, wobei nur eines der Haltestücke in oder am entsprechenden Leitungsrahmen (3) befestigt ist.

6. Leitungsrahmen nach einem der vorstehenden Ansprüche, bereitgestellt mit einem Druckmesser (9) zum Verbinden mit dem Anschlussstück (7) und zum Messen des Drucks im Abschnitt mit freiem Volumen (6) des Leitungsrahmens (3).

7. Leitungsrahmen nach einem der vorstehenden Ansprüche, wobei das System mit einer Pumpe zum Verbinden mit dem Anschlussstück (7) und Einführen von druckbeaufschlagtem Gas in den Abschnitt mit freiem Volumen (6) bereitgestellt ist.

8. Leitungsrahmen nach einem der vorstehenden Ansprüche, wobei der Leitungsrahmen (3) mit einem Flansch (8) bereitgestellt ist, der den Leitungsrahmen (3) abdichtend in oder auf einer Öffnung (2) einpasst, um dadurch mindestens ein Rohr (15) und/oder Kabel zu erstrecken.

9. Leitungsrahmen nach einem der vorstehenden Ansprüche, wobei der Leitungsrahmen (3) in mindestens einem Trennelement (1) zum Abgrenzen von mindestens einem Raum einer Schiffskonstruktion, einer schwimmenden Konstruktion oder einer nichtschwimmenden Offshore-Konstruktion zum Halten von Menschen an Bord bereitgestellt ist.

## Revendications

1. Châssis de conduit (3), pour le passage étanche d'au moins un tuyau (15) et/ou câble qui s'étend au travers du châssis (3) et pour une installation à bord d'une construction de navire, d'une construction flottante, ou d'une construction en mer non flottante destinée à contenir à bord des êtres humains, le châssis (3) présentant une paroi intérieure (4) et au moins deux extrémités (5) qui peuvent être scellées en utilisation chacune pour obtenir un état scellé du châssis de conduit (3), le châssis de conduit (3) présentant entre les extrémités (5) une section de volume libre (6) pour piéger de l'air entre des extrémités scellées (5), le châssis de conduit étant doté d'au moins deux dispositifs d'étanchéité (12) pour placer le châssis de conduit (3) dans l'état scellé, le châssis de conduit étant en outre doté d'au moins un élément d'écartement (14) pour établir dans le châssis de conduit (3) une distance entre les dispositifs d'étanchéité (12) respectifs, dans lequel le au moins un élément d'écartement (14) comprend au moins un élément de blocage (13) pour empêcher la section de volume libre (6) d'être complètement occupée par un ou plusieurs dispositifs d'étanchéité (12), et dans lequel l'élément de blocage (13) est une partie d'un seul tenant du châssis de conduit (3),
**caractérisé par**
le châssis de conduit (3) étant doté d'au moins un connecteur (7) pour établir une connexion fluidique entre la section de volume libre (6) et une position extérieure au châssis de conduit, le connecteur (7) pouvant être refermé et ouvert de sorte que dans la section de volume libre (6) la pression de gaz puisse être changée pour tester dans l'état scellé l'intégrité d'étanchéité, le connecteur (7) étant fixé au châssis de conduit (3) sur une position qui facilite un accès direct à la section de volume libre (6).

2. Châssis de conduit selon la revendication 1, dans lequel chacun des au moins deux dispositifs d'étanchéité (12) présente une bride (8) pour empêcher l'insertion du dispositif d'étanchéité (12) trop profondément dans le châssis de conduit (3), dans lequel la longueur du châssis de conduit est telle que suite à l'insertion maximum de ces dispositifs d'étanchéité (12) la section de volume libre (6) reste disponible.

3. Châssis de conduit selon l'une quelconque des revendications précédentes, dans lequel pour chaque extrémité un élément de retenue (10) est prévu de sorte qu'un dispositif d'étanchéité (12) soit retenu dans le châssis de conduit lorsque la pression dans la section de volume libre (6) est augmentée par rapport à une pression extérieure au châssis de conduit sur le côté de cet élément de retenue (10).

4. Châssis de conduit selon la revendication 3, dans lequel au moins un des éléments de retenue (10) peut être fixé dans ou au châssis de conduit (3).

5. Châssis de conduit selon la revendication 3 ou 4, dans lequel seul un des éléments de retenue est fixé dans ou au châssis de conduit respectif (3).

6. Châssis de conduit selon l'une quelconque des revendications précédentes, doté d'un manomètre (9) pour une connexion avec le connecteur (7) et pour une mesure de la pression dans la section de volume libre (6) du châssis de conduit (3).

7. Châssis de conduit selon l'une quelconque des revendications précédentes, dans lequel le système est doté d'une pompe pour une connexion avec le connecteur (7) et l'introduction du gaz sous pression dans la section de volume libre (6).

8. Châssis de conduit selon l'une quelconque des revendications précédentes, dans lequel le châssis de conduit (3) est doté d'une bride (8) insérant de manière étanche le châssis de conduit (3) dans ou sur une ouverture (2) pour une extension au travers de celle-ci d'au moins un tuyau (15) et/ou câble.

9. Châssis de conduit selon l'une quelconque des revendications précédentes, dans lequel le châssis de conduit (3) est prévu dans au moins un élément de séparation (1) pour une délimitation d'au moins un compartiment d'une construction de navire, d'une construction flottante, ou d'une construction en mer non flottante destinée à contenir à bord des êtres humains.
